Europäisches Patentamt

European Patent Office

Office européen des brevets

(11) Veröffentlichungsnummer: **0 488 060 A2**

# EUROPÄISCHE PATENTANMELDUNG

(21) Anmeldenummer: **91119893.5**

(22) Anmeldetag: **21.11.91**

(51) Int. Cl.5: **C08L 1/28**, //C04B35/00, B22F3/00

(30) Priorität: **27.11.90 DE 4037690**

(43) Veröffentlichungstag der Anmeldung: **03.06.92 Patentblatt 92/23**

(84) Benannte Vertragsstaaten: **AT BE CH DE DK ES FR GB GR IT LI LU NL SE**

(71) Anmelder: **HOECHST AKTIENGESELLSCHAFT Postfach 80 03 20 W-6230 Frankfurt am Main 80(DE)**

(72) Erfinder: **Höpfner, Paul Freudenbergstrasse 113a W-6200 Wiesbaden(DE)**

(54) **Plastifiziermittel und Spritzgussmassen aus metallischen und keramischen Pulverwerkstoffen.**

(57) Das Plastifiziermittel für metallische und/oder keramische Pulverwerkstoffe besteht aus 70 bis 90 Gew.-% eines wasserfreien Glykols, wie Ethylenglykol, und 30 bis 10 Gew`-% einer Alkylhydroxyalkylcellulose, wie Methylhydroxyethylcellulose.

Die Herstellung des Plastifiziermittels kann zusammen mit der Plastifizierung des Pulverwerkstoffes als einstufiger Prozeß, aber auch in einem separaten Verfahrensschritt durchgeführt werden.

Die Plastifiziermittel eignen sich zur Herstellung von Spritzgußmassen aus denen sich ihrerseits elastisch feste Bauteile herstellen lassen.

Fig. 1

EP 0 488 060 A2

Die vorliegende Erfindung bezieht sich auf Plastifiziermittel und Spritzgußmassen, bestehend aus dem Plastifiziermittel und metallischen und/oder keramischen Pulverwerkstoffen, Verfahren zur Herstellung der Spritzgußmassen, die Verwendung der Plastifiziermittel sowie die Verwendung der Spritzgußmassen.

Zur Herstellung von Bauteilen aus Pulverwerkstoffen sind vielfältige Formgebungsverfahren im Gebrauch. Unter diesen nehmen Extrusions- und Spritzgießverfahren eine Sonderstellung ein. Sie ermöglichen die präzise Herstellung von Bauteilen komplizierter Geometrie in sehr homogener Beschaffenheit. Sie verlangen jedoch nach Kornform, Korngröße und Korngrößenverteilung sorgfältig ausgewählte Pulverwerkstoffe und in Menge und Art ebenso sorgfältig auf die Werkstoffe abgestimmte Plastifiziermittel.

Die Plastifizierung von Pulverwerkstoffen ist in der Keramik-Industrie seit langem in Gebrauch. Aus plastifizierten Massen werden Stäbe und Röhren, aber auch so komplizierte Profile wie Wabenkörper für die Herstellung von Abgas-Katalysatoren extrudiert.

Dazu werden im allgemeinen 0,5 bis 0,6 Volumenteile Pulverwerkstoff mit 0,5 bis 0,4 Volumenteilen Plastifiziermittel gemischt. Das Plastifiziermittel besteht in der Regel aus 10-20 Gew.-% eines Bindemittels, meist Methylcellulose, und aus 90 bis 80 Gew.-% Wasser mit geringen Zusätzen von Glykolen oder Glycerin. Das Wasser dient als Lösemittel, Glykol und Glycerin als Weichmacher für die Methylcellulose.

Das Plastifiziermittel muß homogen in der Masse verteilt werden und alle Poren zwischen den Werkstoffteilchen füllen. Druckgefälle bei der Formgebung dürfen keine Plastifiziermittel-Wanderung, Temperaturgefälle keine gravierenden Viskositätsänderungen auslösen. Endlich muß das Plastifiziermittel der Masse Grün- und Trockenfestigkeit geben.

Dieses Plastifiziermittel-Profil ist sowohl für den Extrusions- wie auch für den Spritzgußprozeß zutreffend. Zusätzlich verlangt jedoch der Spritzguß, daß das Plastifiziermittel der in die Form gespritzten Masse schnell soviel Festigkeit vermittelt, daß die Formkörper nach kurzer Zeit ohne Beschädigung ausgestoßen werden können.

Nach dem Stand der Technik werden Pulverwerkstoffe für den Spritzguß bevorzugt mit thermoplastischen Kunststoffen/Weichmachern/Wachsen plastifiziert und heiße Massen in gekühlte Formen gespritzt.

Dieses Verfahren ist für den Spritzguß selbst zufriedenstellend. Es bereitet aber erhebliche Schwierigkeiten, die genannten Plastifiziermittel vor dem Sintern aus den Bauteilen zu entfernen. Denn im Gegensatz zu den mit wäßriger Methylcellulose-Paste plastifizierten keramischen Extruder-Formkörpern lassen sich die Kunststoffe/Weichmacher/Wachse aus den plastifizierten, nicht porösen Spritzguß-Bauteilen nur sehr langsam und mit erheblichem Aufwand wieder entfernen. Die Möglichkeit, größere und dickwandige Bauteile aus derart plastifizierten Massen im Spritzguß herzustellen, ist dadurch begrenzt. Das US-Patent 4,114,480 lehrt deshalb, Metallpulver mit der bekannten Methylcellulose-Wasser-Glycerin-Mischung zu plastifizieren, den Spritzprozeß - wie in der Keramik - kalt durchzuführen und die nötige Festigkeit der Bauteile dadurch zu erzeugen, daß die Masse in eine auf etwa 80°C erhitzte Form gespritzt wird. Bei dieser Temperatur koaguliert bekanntlich die in Wasser gelöste Methylcellulose und bildet unter Wasserabgabe ein Gel, in dem der Pulverwerkstoff fest eingebettet ist. Solcherart hergestellte Bauteile können - wie in der Keramik - getrocknet und ohne Probleme gesintert werden.

Einen ähnlichen Weg beschreibt das EP-Patent 246 438. Im wäßrigen Plastifiziermittel wird lediglich Methylcellulose durch Agar-Agar ersetzt. Dies ermöglicht, die auf 80°C erwärmten Massen in Formen, die auf 20°C gekühlt sind, zu spritzen. Agar-Agar-Lösungen in Wasser sind bekanntlich bei Temperaturen über 35°C flüssig und gelieren bei Abkühlung unter diese Temperatur.

Die technische Lehre aus dem US-Patent 4,114,480 und dem EP-Patent 246 438 löst zwar das Problem des Austreibens-Ausbrennens der Plastifiziermittel und ermöglicht dadurch die Herstellung größerer, dickwandiger Bauteile.

Infolge der Verwendung wasserhaltiger Plastifiziermittel erfordern aber beide Verfahren spezielle Spritzgießeinrichtungen. Sie eignen sich nicht für konventionelle Kunststoff-Spritzgießmaschinen, die auf Arbeitstemperaturen über 100°C und auf Versorgung mit granulierten Rohstoffen eingestellt sind.

Der vorliegenden Erfindung liegt die Aufgabe zugrunde, ein neues für den Spritzguß geeignetes Plastifiziermittel für keramische und metallische Pulverwerkstoffe zur Verfügung zu stellen, welches die oben beschriebenen Nachteile der bekannten Plastifiziermittel auf Basis von Kunststoffen/Weichmachern/Wachsen einerseits und Polysacchariden/Wasser andererseits vermeidet. Ferner sollen mit Hilfe des erfindungsgemäßen Plastifiziermittels Spritzgußmassen aus keramischen und/oder metallischen Pulverwerkstoffen zur Verfügung gestellt werden, aus denen rieselfähige Granulate herstellbar sind, die mittels konventioneller Kunststoff-Spritzgießmaschinen zu Bauteilen geformt werden können. Die Bauteile sollen nach der Trocknung einem werkstoffspezifischen Sinterprozeß unterworfen werden.

Diese Aufgabe wird gelöst durch ein Plastifiziermittel, das aus 70 bis 90 Gew.-%, vorzugsweise 75 bis 85 Gew.-%, eines wasserfreien Glykols und 10 bis 30 Gew.-%, vorzugsweise 15 bis 25 Gew.-% einer Alkylhydroxyalkylcellulose besteht. Die erfindungsgemäßen Kombinationen aus Glykol und Cellulosederivat sind in Anspruch 1 angegeben.

Es wurde überraschend gefunden, daß Lösungen der wasserlöslichen "heat-gelating" Celluloseether ein völlig anderes temperaturabhängiges Gelierverhalten zeigen, wenn anstelle von Wasser wasserfreie Glykole als Lösemittel eingesetzt werden. Während z.B. eine wäßrige Methylcellulose-Lösung bei Erwärmung auf etwa 80°C ein festes Gel bildet, tritt bei Verwendung von wasserfreiem Glykol anstelle von Wasser überraschenderweise eine Umkehr der "heat-gelation" ein, wie folgender Versuch zeigt:

Eine Suspension von beispielsweise 7,5 Gew.-% Methylhydroxypropylcellulose (®Methocel K4M, Herst. Dow Chemical Company) in wasserfreiem Diethylenglykol wird unter beständigem Rühren und Drehmomentmessung am Rührer erwärmt. Die Suspension bleibt dünnflüssig, bis die Temperatur $T_Q$ 120°C erreicht ist. Dann steigt das Drehmoment steil an. Der Celluloseether quillt sehr stark, löst sich aber noch nicht. Bei weiterer Erwärmung beginnen die Celluloseether-Partikel sich zu lösen. Das Drehmoment sinkt, bis bei etwa $T_Q$ + 50 = 170°C vollständige Lösung erreicht wird. Bei langsamer Kühlung und reduzierter Rührgeschwindigkeit steigt dann die aus dem Drehmoment zu errechnende Viskosität der Lösung von 40 Pa s bei 170°C auf 110 Pa s bei etwa 120°C. Abkühlung unter 120°C erzeugt einen steilen Anstieg des Drehmomentes. Die Lösung geliert bei der Temperatur $T_Q$.

Durch die thermoreversible Gelierung entsteht aus der hochviskosen Celluloseether-Glykol-Lösung ein formbeständiger, überraschend fester und hochelastischer Körper. Liegt die Substitutionskennzahl nicht im beanspruchten Bereich, scheidet sich selbst bei Luftabschluß Glykol ab.

Synärese des Gels ist bei Luftzutritt praktisch immer zu beobachten. Von der Oberfläche des Gelkörpers läuft dann aber, bedingt durch die Hygroskopizität des Glykols, ein Glykol-Wasser-Gemisch ab. Zur Beurteilung der Synärese ist deshalb Feuchtigkeitausschluß erforderlich.

Es wurde nun gefunden, daß sich die bekannten wasserlöslichen nichtionischen Celluloseether in den mono- und oligomeren Ethylen- und Propylenglykolen mit Molgewichten unter 250 nach gleichem Schema lösen wie die als Beispiel herangezogene Methylhydroxypropylcellulose. Methylcellulosen (MC) haben hohe Quell- und Geliertemperaturen $T_Q$. Sie bilden feste Gele, allerdings mit starker Synärese. Hydroxyethyl- und Hydroxypropylcellulosen (HEC, HPC) haben niedrige Quelltemperatur $T_Q$. Sie bilden keine oder sehr weiche Gele und sind deshalb für die Zwecke der Erfindung nicht geeignet.

Die erfindungsgemäßen Mischether Methyl- und Ethylhydroxyethylcellulose (MHEC, EHEC) sowie Methyl- und Ethylhydroxypropylcellulose (MHPC) bilden den Übergang zwischen den Extremen.

Die Höhe der Quell- und Geliertemperatur $T_Q$, die Festigkeit und die Synärese der Gele sind von Art und Höhe der Substitution abhängig. Art und Höhe der Substitution von Celluloseethern werden üblicherweise bezogen auf den Grundbaustein der Cellulose, die Anhydroglucose-Einheit, und ihre 3 substituierbaren Hydroxylgruppen. Der $DS_M$ bzw. $DS_E$ bezeichnet die Zahl der durchschnittlich in den Grundbaustein eingeführten Methyl- bzw. Ethylgruppen; der $MS_{EO}$ bzw. $MS_{PO}$ gibt die Zahl der eingeführten Ethylenoxid- bzw. Propylenoxid-Moleküle an. Die bevorzugten MS- und DS-Werte zur Festlegung der Substitution der Celluloseether sind in Anspruch 1 genannt.

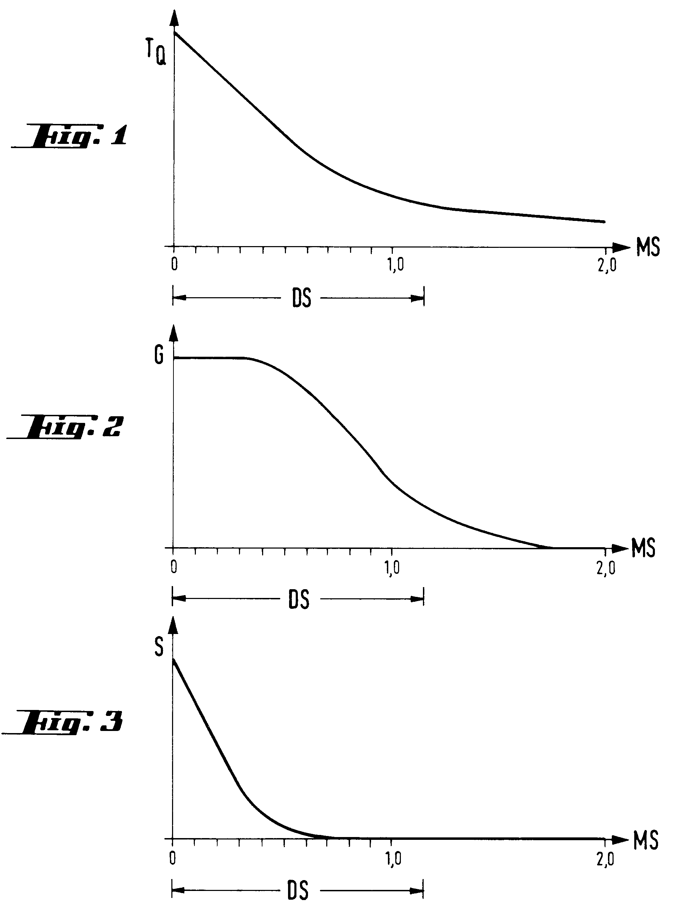

Der Einfluß der Substitution wird durch das verwendete Lösemittel modifiziert. Ethylen- und Propylenglykole verhalten sich dabei unterschiedlich.
So hängen in Ethylenglykolen Quell- und Geliertemperatur $T_Q$, Gelfestigkeit und Synärese vorwiegend vom MS der Celluloseether ab, wobei Ethylenoxid- und Propylenoxid-Anlagerung gleichwertig sind. Um Gelierung zu erzeugen, sind Methyl- oder Ethyl-Substituenten notwendig. Der $DS_{Alkyl}$ kann aber in weiten Grenzen variieren (Fig. 1 bis 3). In Ethylenglykolen, vorzugsweise Di- oder Triethylenglykol, gelöst, eignen sich für die Zwecke der Erfindung die Alkylhydroxyalkylcellulosen Methylhydroxyethyl-, Ethylhydroxyethyl-, Methylhydroxypropyl- und Ethylhydroxypropylcellulose oder ein Gemisch davon, die vorzugsweise einen MS größer als 0,3, aber kleiner als 0,7, insbesondere 0,45 bis 0,6, und einen DS von vorzugsweise 0,9 bis 2 besitzen. In diesem Substitutionsbereich lassen sich niedrige Quell- und Geliertemperaturen ($T_Q$ 110°C in Di-, 130°C in Triethylenglykol) mit hoher Gelfestigkeit und geringer Synärese verbinden und damit die optimalen Eigenschaften erreichen.

Entsprechende Zusammenhänge werden auch für die Lösung und Gelbildung von Methylhydroxyethylcellulose und Methylhydroxypropylcellulose in Propylenglykolen, insbesondere Di- und Tripropylenglykol, gefunden. In diesen Lösemitteln ist jedoch der Einfluß des $MS_{PO}$ wesentlich größer als der des $MS_{EO}$. Außerdem wirkt sich die Höhe der Methylierung, der $DS_M$, aus.
Eine befriedigende Quantifizierung der Substituenten-Wirksamkeit im interessierenden Bereich gelingt, wenn man nach der Formel $DS_M$ +

$1,5 \cdot MS_{Hydroxypropyl} + 0,5 \cdot MS_{Hydroxyethyl}$ eine Substitutions-Kennzahl berechnet.

Die berechnete Substitutionskennzahl ist vorzugsweise größer als 2,4, aber kleiner als 2,8, insbesondere 2,5 bis 2,7, wobei $DS_M$ größer als 1,4 ist.

Um pseudoplastische Fließeigenschaften zu erzeugen, muß der Polymerisationsgrad der in Glykol gelösten Celluloseether hoch sein. Üblicherweise wird anstelle des Polymerisationsgrades die leicht zu messende Viskosität wäßriger Lösungen angegeben. Für die Zwecke der Erfindung geeignete Celluloseether haben in 2 %iger wäßriger Lösung bei 20°C eine Viskosität von 1-300 Pas, vorzugsweise 3-100 Pas.

Von den als Lösemittel in Frage kommenden Glykolen sind die Monomeren, nämlich Ethylen- und 1,2-Propylenglykol, vor allem aber Di- und Triethylenglykol sowie Di- und Tripropylenglykol zur Herstellung von Plastifiziermittel geeignet. Unter dem Gesichtspunkt Arbeitssicherheit ist Triethylenglykol aufgrund seines niedrigeren Dampfdruckes zu bevorzugen. Ethylenglykole mit höherem Molekulargewicht als Triethylenglykol sind zwar als Lösemittel für Celluloseether verwendbar, lassen sich aber zunehmend schwieriger verflüchtigen.

Bei Versuchen mit metallischen und keramischen Pulverwerkstoffen, insbesondere im Korngrößenbereich 0,02 bis 30 $\mu$m, wurde gefunden, daß mit dem erfindungsgemäßen Plastifiziermittel nach Anspruch 1 gute Spritzgußmassen herzustellen sind. Die erfindungsgemäße Spritzgußmasse enthält 0,4 bis 0,6 Volumenteile des Plastifiziermittels und 0,6 bis 0,4 Volumenteile des Pulverwerkstoffs.

Für die Herstellung der aus den beschriebenen Alkylhydroxyalkylcellulosen und Glykolen bestehenden Plastifiziermittel sowie der Spritzgußmassen gelten folgende Richttemperaturen:
Bei Einsatz von Diethylen- oder -propylenglykol kann die die Lösung des Celluloseethers einleitende Temperatur $T_Q$ hinreichend genau mit 110°C, bei Einsatz der entsprechenden Triglykole mit 130°C angenommen werden. Zur vollständigen Lösung sind $T_Q + 50 = 160$ bzw. 180°C erforderlich. Da der Übergang der Lösung in den Gelzustand wiederum bei $T_Q$ erfolgt, wird dieser Wert der Beschreibung des gesamten Verfahrens zugrunde gelegt.

Die Herstellung des erfindungsgemäßen Plastifiziermittels kann zusammen mit der Plastifizierung des Pulverwerkstoffes als einstufiger Prozeß, aber auch in einem separaten Verfahrensschritt durchgeführt werden.

Bei der einstufigen Verfahrensweise gibt man in einen auf ca. 100°C vorgeheizten Kneter das gegebenenfalls vorgewärmte Glykol und den Celluloseether. Die Temperatur wird bei laufendem Knetwerk gesteigert. Sobald die Mischung pastös wird, fügt man portionsweise den Pulverwerkstoff zu. Die Portionsgröße richtet sich nach der Größe des Primärkornes des Pulverwerkstoffes und seiner Agglomeration und wird um so kleiner gewählt, je feiner das Korn und je fester seine Sekundärstruktur ist. Vor jedem Zusatz ist die Wiederherstellung des pastösen, teigigen Zustandes der Mischung abzuwarten. Die Temperatur der Mischung sollte nach der Pulverzugabe für 10 bis 15 Minuten $T_Q$ + (40 bis 60)°C erreichen. Danach wird die Temperatur hinreichend abgesenkt, um die Granulierung der erhaltenen Masse durchführen zu können. Die Temperaturabsenkung beträgt gewöhnlich 20 bis 30°C.

Wenn die Masse homogen erscheint, die Kneterwände und Schaufeln blank sind und die angestrebte Temperaturabsenkung vollzogen ist, wird die in großen Stücken zusammenhängende Masse granuliert, also beispielsweise mittels Austragsschnecke durch eine Lochplatte gedrückt und zu Pellets geschnitten. Durch einen trockenen Luftstrom wird die Auspreßseite auf eine Temperatur 10-30°C unter $T_Q$ gekühlt, um ein Zusammenkleben der Pellets zu verhüten. Die Pellets werden in Portionsbehältern gesammelt und, da sie hygroskopisch sind, verschlossen aufbewahrt.

Ist der Kneter nicht mit einer Austragsschnecke bestückt, empfiehlt es sich, die Masse bei laufendem Knetwerk 10-20°C unter $T_Q$ zu kühlen. Die Schaufeln zerschneiden dann die Masse, so daß man den Kneter bequem leeren und das feinstückige Material einer entsprechenden Granuliermaschine zuführen kann.

Bei der zweistufigen Verfahrensweise stellt man im Kneter zunächst nur das Plastifiziermittel her, indem man dem auf etwa 60-100°C angewärmten Glykol die erforderliche Menge Celluloseether zusetzt, den Kneter schließt, bei laufendem Knetwerk den Druck einmalig auf $P_{abs} = 0,1-0,3$ bar senkt, um Luft und Wasserdampf abzuziehen, und dann die Temperatur auf $T_Q$ + (40 bis 60)°C in der Plastifiziermittel-Masse steigert. Die Maximaltemperatur wird etwa 10-30 Minuten gehalten. Danach wird gekühlt, bis die Temperatur im Plastifiziermittel unter $T_Q$ sinkt. Die Knetschaufeln zerschneiden dann das Plastifiziermittel in kleine, leicht handhabbare Stücke, die noch warm in luftdicht zu verschließende Gebinde abgepackt werden. Verfügt der Kneter, wie zuvor beschrieben, über eine Granuliereinrichtung, so kann das Plastifiziermittel in entsprechender Weise granuliert werden. Im zweiten Verfahrensschritt wird dann der Pulverwerkstoff mit dem vorfabrizierten Plastifiziermittel gemischt.

Die zweistufige Arbeitsweise hat verschiedene Vorzüge. Zur Herstellung der Spritzgußmasse sind nur 2 statt 3 Komponenten zu handhaben. Die Pulverwerkstoffe können in größeren Portionen oder gar auf einmal eingesetzt werden.

Eine gegebenenfalls erforderliche Korrektur der Plastizität kann nicht nur einseitig durch Zugabe von Pulverwerkstoff sondern auch von Plastifiziermittel anstelle von Glykol allein erreicht werden. Endlich kann man die Temperatur der Spritzgußmasse im Kneter gut 20°C niedriger halten und dadurch die Dampf- und Kondensatbildung im Kneter reduzieren. Die beim Umgang mit Lösemitteln, hier mit erhitzten Glykolen, erforderlichen Vorsichtsmaßnahmen werden allerdings nicht überflüssig.

Die erfindungsgemäß hergestellten Granulate der plastifizierten Pulverwerkstoffe sind nicht klebend und scheiden kein Glykol aus. Sie sind mechanisch stabil und auch rieselfähig, wenn sie beispielsweise zylinderförmig sind und die Höhe ungefähr dem Durchmesser des Zylinders entspricht. Sie sind zwar etwas hygroskopisch, nehmen aber bei unbeabsichtigtem Luftzutritt nur an ihrer Oberfläche Feuchtigkeit auf. Es wurde bisher nicht beobachtet, daß dadurch Schwierigkeiten beim Spritzguß entstehen. Die Feuchtigkeit entweicht offenbar bereits im Einzugs- und Förderbereich der Schnekke.

Die Eigenschaften der Spritzgußmassen hängen allerdings nicht nur von der Beschaffenheit des Plastifiziermittels, sondern auch von dem Pulverwerkstoff, und zwar speziell von dem werkstoffspezifischen Plastifiziermittelbedarf ab.

Der Plastifiziermittelbedarf wird zweckmäßig durch den Volumenanteil des Pulverwerkstoffes in der plastifizierten Masse ausgedrückt und kennzeichnet den Zustand, in dem die Werkstoffpartikel gerade noch gegeneinander verschiebbar sind und die Masse gerade noch fließfähig und spritzbar ist. Der Volumenanteil liegt bei plastischer Formgebung stets in der Nähe des theoretischen Wertes 0,52 für kubische Kugelpackung und läßt sich nur experimentell ermitteln, wobei meist Werte zwischen 0,4 und 0,6 gefunden werden. Der Plastifiziermittelbedarf eines Werkstoffes ist durch die Qualität des Plastifiziermittels nur unwesentlich zu beeinflussen.

Für die Formung der erfindungsgemäß plastifizierten Pulverwerkstoff-Massen eignen sich konventionelle Kunststoff-Spritzgießmaschinen. Die Temperaturführung in der Maschine entspricht der für Thermoplastverarbeitung. Als Richttemperaturen gelten $T_Q$ + 50°C an der Düse und $T_Q$ -50°C in der Form. Mäßige Abweichungen von den Richtwerten erzeugen keine gravierenden Eigenschaftsänderungen der Spritzgußmassen. Sie reagieren wie thermoplastische Kunststoffe. Starke Abweichungen sollten vermieden werden. Bei Temperaturen über 200°C beginnt beispielsweise die thermische Zersetzung der Celluloseether. Der Einspritzdruck muß bei der Verarbeitung der Pulverwerkstoff-Massen höher gewählt werden als bei Kunststoff.

Durch die Abkühlung in der Form schwindet das im Plastifiziermittel enthaltene Glykolvolumen um ca. 8-9 %. Die Entformung der gespritzten Bauteile wird durch die Dichteänderung des Glykols und die dadurch ausgelöste Kontraktion der Masse gefördert. Diese Kontraktion liefert einen wesentlichen Teil der Schwindung des Bauteils im Vergleich zur Form.

Die ausgeformten Bauteile sind elastisch fest und ebenso wie die Granulate hygroskopisch. Sie werden zweckmäßig in luftdicht verschlossenen Behältern aufbewahrt oder umgehend getrocknet. Zur Trocknung eignen sich alle Systeme, bei denen die Bauteile in einem Luftstrom erwärmt werden, der das verdunstete Glykol abführt, ausscheidet oder verbrennt. Die Temperatur der Bauteile kann dabei schnell bis in die Nähe von $T_Q$ gesteigert, mit einer Rate von etwa 10°C/h über $T_Q$ hinweg geführt und danach gegebenenfalls wieder schneller gesteigert werden, bis bei über 200°C, insbesondere über 250°C die thermische Zersetzung der Celluloseether einsetzt. Während der Trocknung schwindet das Bauteil. Es entsteht zugleich ein offenes Porensystem im Bauteil, das bei Ende der Trocknung eine Größe von 30-40 % des Bauteilvolumens erreicht. Durch dieses Porensystem entweichen - analog zu dem bekannten Brennen bindemittelhaltiger Keramik-Ware - die thermischen Zersetzungsprodukte des Celluloseethers. Die Figuren 1 bis 3 zeigen schematisch die Abhängigkeit der Quell- und Geliertemperatur $T_Q$ (Fig. 1), der Gelfestigkeit G (Fig. 2) und der Gel-Synärese S (Fig. 3) jeweils von der Substitution MS (MS ist $MS_{Hydroxyalkyl}$) der Celluloseether gemessen in Ethylenglykolen.
DS bedeutet $DS_{Alkyl}$ = 0,9 bis 2.
$T_Q$, G und S hängen vorwiegend vom MS der Celluloseether ab. Der DS-Wert kann dagegen in weiten Grenzen variieren.

Der Gegenstand der Erfindung wird in den Beispielen 1 und 2 erläutert.

Beispiel 1

400 g eines handelsüblichen, durch Sprühtrocknung granulierten Keramik-Werkstoffes mit 95 % Zirkondioxid (Primärkorngröße 0,02 $\mu$m und Dichte 5,94 g/cm³) werden bei 80°C mit einer Paste aus 4 g eines Polyethylen-Polyethylencopolymer-Wachses in 16 g Benzin gemischt und getrocknet. Diese Vorbehandlung verhütet Dilatanz und stabilisiert die gleichmäßige Verteilung des Pulverwerkstoffes in der Spritzgußmasse.

In einen auf 120°C vorgeheizten IKA-Hochleistungskneter HKD 06 der Firma Janke und Kunkel, DE werden 64 g auf 80°C vorgewärmtes Dipropylenglykol und 14 g MHPC gegeben. Der Celluloseether hat DS 1,87, MS 0,44 und 40 Pas in 2 %iger wäßriger Lösung.

Dann wird die Kneter-Heizung auf 175°C eingestellt. Bei laufendem Knetwerk werden 120 g des Pulverwerkstoffes zugesetzt. Nachdem die Mischung pastös-teigig geworden ist, werden in Abständen von je 10 Minuten 3 x 70 g und 2 x 37 g Werkstoff beigemischt. Der Verbund der Masse bleibt erhalten, die Temperatur steigt auf 160°C nach dem letzten Werkstoffzusatz. Darauf wird die Heizungstemperatur auf 150°C zurückgestellt und noch 15 Minuten geknetet. Die weiche, stückige Masse wird danach in die auf 135°C vorgewärmte Labor-Granulierpresse übergeführt, durch eine Lochscheibe mit 5 mm Rundlöchern gepreßt und zu Pellets von ca. 4 mm Länge geschnitten. Die Pellets werden in einem verschlossenen Behälter aufbewahrt.

Die Spritzbarkeit der Masse wird mit einer Labor-Spritzgießmaschine geprüft. Das zu formende Bauteil ist eine leicht konische Röhre mit 12 bzw. 16 mm lichter Weite und 60 mm Höhe. Die Wandstärke ist zwischen 1 und 3 mm abgestuft. Um die Prüfung zu erschweren, wird die Röhre vom 1 mm Ende aus durch 3 Düsen mit 2 mm Durchmesser angußlos gespritzt.

Dieser Prüfkörper läßt sich mit der beschriebenen Spritzgußmasse bei 165°C an den Düsen und 125°C im Werkzeug mit einem Kolbendruck von 500 bar einwandfrei spritzen und entformen.

Die Prüfkörper werden in einem Umluft-Trockner bei konstant 100°C getrocknet. Sie geben in 1 h ca. 50 %, in 5 h ca. 90 % und in 10 h 100 % des in ihnen enthaltenen Dipropylenglykols ab.

Die einzelnen Verfahrensstufen werden durch Dichtemessungen überwacht. Daraus ergibt sich ein Verdampfungsverlust von 5 g Dipropylenglykol während des Plastifizierens. Der Volumenanteil des Werkstoffes in der Masse steigt dadurch bei 160°C von 0,44 auf 0,46 bzw. auf 0,49 nach Abkühlung auf 20°C. Durch die Trocknung erhöht sich der Volumenanteil des Werkstoffes auf 0,51. Der Volumenanteil Poren im getrockneten Prüfkörper erreicht 0,39. Aus der Volumenkontraktion durch Abkühlung und Trocknung errechnet sich die Längenschwindung des Prüfkörpers gegen die Spritzform zu 3,5 % bei guter Übereinstimmung mit Messungen der Länge des Prüfkörpers.

Das Granulat dieses Versuches wird nach einer Lagerzeit von 3 Wochen auf einer Kunststoff-Spritzgießmaschine (Firma Arburg, DE) mittels Vielfachwerkzeug zu durchbrochenen, einseitig gezähnten, profilierten Leisten mit maximal 3 mm Dicke geformt. Düsentemperatur 170°C, Formtemperatur 20°C.

Die präzise ausgeformten Bauteile werden ohne Verzug oder Blasenbildung durch Erwärmen auf 100°C in 60 Minuten und weitere Temperatursteigerung auf 400°C in 6 h plastifiziermittelfrei gemacht. Bei dieser Behandlung steigt der Volumenanteil des Werkstoffes auf 0,74, wodurch die Voraussetzungen für das Dichtbrennen des Bauteils geschaffen sind.

Beispiel 2

Zur Herstellung des Plastifiziermittels werden in den auf 100°C vorgewärmten Labor-Kneter 122,5 g Triethylenglykol und 37,5 g MHPC gegeben. Der Celluloseether hat DS = 1,40, MS 0,55 und 50 Pas in 2 %iger wäßriger Lösung.

Bei laufendem Knetwerk wird der Druck auf $P_{abs}$ = 0,1 bar reduziert, das Knetwerk dicht verschlossen und die Heizung auf 180°C geschaltet. Nachdem die Glykol-Celluloseether-Mischung 170°C erreicht und eine gummiartige Konsistenz angenommen hat, wird der Kneter gekühlt. Er beginnt die Masse zu zerschneiden, wenn deren Temperatur unter 120°C fällt. Das Schneiden wird fortgesetzt, bis das Plastifiziermittel in ca. 5 mm große Stücke zerlegt ist. Das noch 80°C warme Plastifiziermittel wird in einen Behälter abgefüllt und verschlossen. Im Laufe von 8 Tagen werden dem Behälter wiederholt Plastifiziermittel-Proben entnommen. Dabei werden weder Synärese noch Feuchtigkeitsaufnahme des Gels beobachtet.

63 g des vorgefertigten Plastifiziermittels werden dann mit 600 g Metallpulver, Werkstoff Nr. 1.4401, zur Spritzgußmasse gemischt. Das Metallpulver besteht aus Kugeln kleiner als 16 $\mu$m mit 2 dominierenden Fraktionen um 10 und um 2 $\mu$m Durchmesser. Seine Dichte beträgt 7,78 g/cm³. Die Mischung erfolgt im Kneter des Beispiels 1. Die Temperatur wird in 50 Minuten auf 145°C, gemessen in der Spritzgußmasse, gesteigert und 15 Minuten auf dieser Höhe gehalten. Dann wird gekühlt, bis die Knetschaufeln die Masse bei 120 bis 100°C in Stücke kleiner als 10 mm zerschneiden. Der Kneter wird geleert und die Masse in einem verschlossenen Behälter aufbewahrt.

Die Spritzbarkeit der Masse wird mit Maschine und Werkzeug des Beispiels 1 geprüft. Der Prüfkörper läßt sich bei 500 bar Kolbendruck mit Temperaturen von 140 bis 155°C an den Düsen und 80-90°C in der Form einwandfrei spritzen und entformen.

Die Prüfkörper werden in einem verschlossenen Behälter gesammelt und im Umlufttrockner getrocknet. Dabei wird die Temperatur des Trockners in 15 Minuten auf 120°C und dann mit einer Rate von 10°C/h bis 170°C gesteigert. Die Prüfkörper geben in 1 h ca. 30 %, in 5 h ca. 98 % und in der gesamten, 6 h 15 min. betragenden Trockenzeit 100 % des in ihnen enthaltenen Triethylenglykols ab.

Die Verfahrensstufen werden durch Trockenrückstands- und Dichtebestimmungen überwacht. Bis zur Trocknung verdunstet das eingesetzte Triethylenglykol nicht. Der Volumenanteil des Werkstoffes in der Masse ändert sich nur temperaturabhängig von 0,57 bei 150°C auf 0,59 bei 20°C bzw. durch die Trocknung auf 0,62.

Die Längenschwindung der Prüfkörper infolge Volumenkontraktion durch Abkühlung und Trocknung errechnet sich zu 2,6 %. Entsprechende Werte ergeben sich aus der Längenmessung der Prüfkörper.

Mit einer entsprechend aufgebauten, jedoch Diethylenglykol als Lösemittel enthaltenden Masse werden auf einer Spritzgießmaschine der Fa. Arburg (DE) die erwähnten Zahnleisten und eine konische Aufsteckwelle mit Zahnkopf gespritzt. Düsentemperatur 170°C, Formtemperatur 50°C, Druck ca. 500 bar.

Die Bauteile werden präzise geformt und lassen sich ohne Blasenbildung trocknen und sintern.

## Patentansprüche

1. Plastifiziermittel für metallische und/oder keramische Pulverwerkstoffe, dadurch gekennzeichnet, daß das Plastifiziermittel aus 70 bis 90 Gew.-%, vorzugsweise 75 bis 85 Gew.-%, eines wasserfreien Glykols und 30 bis 10 Gew.-%, vorzugsweise 25 bis 15 Gew.-%, einer Alkylhydroxyalkylcellulose besteht, wobei das Glykol ein Ethylenglykol, vorzugsweise Di- oder Triethylenglykol, ist und die Alkylhydroxyalkylcellulose eine Methylhydroxyethyl-, Ethylhydroxyethyl-, Methylhydroxypropyl- oder Ethylhydroxypropylcellulose oder ein Gemisch davon ist, deren $DS_{Alkyl}$ vorzugsweise 0,9 bis 2 und deren $MS_{Hydroxyalkyl}$ vorzugsweise 0,3 bis 0,7, insbesondere 0,45 bis 0,6, ist, oder das Glykol ein Propylenglykol, vorzugsweise Di- oder Tripropylenglykol, ist und die Alkylhydroxyalkylcellulose eine Methylhydroxyethyl- oder Methylhydroxypropylcellulose oder ein Gemisch davon ist, deren Substitutionskennzahl, berechnet als Summe aus $DS_M + 0,5 \cdot MS_{Hydroxyethyl} + 1,5 \cdot MS_{Hydroxypropyl}$, vorzugsweise 2,4 bis 2,8, insbesondere 2,5 bis 2,7, und der $DS_M$ vorzugsweise größer als 1,4 ist.

2. Plastifiziermittel nach Anspruch 1, dadurch gekennzeichnet, daß die Alkylhydroxyalkylcellulose in 2 gew.-%iger wäßriger Lösung bei 20°C eine Viskosität von 1 bis 300 Pas, vorzugsweise 3 bis 100 Pas, hat.

3. Spritzgußmasse bestehend im wesentlichen aus metallischen und/oder keramischen Pulverwerkstoffen und einem Plastifiziermittel, dadurch gekennzeichnet, daß die Spritzgußmasse 0,4 bis 0,6 Volumenteile eines Plastifiziermittels gemäß Anspruch 1 oder 2 und 0,6 bis 0,4 Volumenteile des Pulverwerkstoffs enthält.

4. Verfahren zur Herstellung einer Spritzgußmasse gemäß Anspruch 3, dadurch gekennzeichnet, daß eine Mischung von 0,4 bis 0,6 Volumenteilen des Plastifiziermittels und 0,6 bis 0,4 Volumenteilen des Pulverwerkstoffes auf Temperaturen von 160 bis 180°C unter gleichzeitiger Einwirkung von Druck- und Scherkräften erhitzt wird.

5. Verfahren zur Herstellung einer Spritzgußmasse gemäß Anspruch 3, dadurch gekennzeichnet, daß zuerst nur das Plastifiziermittel auf Temperaturen von 160 bis 180°C unter gleichzeitiger Einwirkung von Druck- und Scherkräften erhitzt und anschließend granuliert wird und daß dann 0,4 bis 0,6 Volumenteile des so vorgefertigten Plastifiziermittels mit 0,6 bis 0,4 Volumenteilen des Pulverwerkstoffes bei Temperaturen von 110 bis 180°C, vorzugsweise 130 bis 160°C, unter gleichzeitiger Einwirkung von Druck- und Scherkräften gemischt werden.

6. Verwendung des Plastifiziermittels gemäß Anspruch 1 oder 2 zur Herstellung von Spritzgußmassen.

7. Verwendung der Spritzgußmasse gemäß Anspruch 3 zur Herstellung von Bauteilen aus keramischen und/oder metallischen Pulverwerkstoffen.

## Patentansprüche für folgenden Vertragsstaat : ES

1. Verfahren zur Herstellung einer Spritzgußmasse gemäß Anspruch 3, dadurch gekennzeichnet, daß eine Mischung von 0,4 bis 0,6 Volumenteilen des Plastifiziermittels und 0,6 bis 0,4 Volumenteilen des Pulverwerkstoffes auf Temperaturen von 160 bis 180°C unter gleichzeitiger Einwirkung von Druck- und Scherkräften erhitzt wird.

2. Verfahren zur Herstellung einer Spritzgußmasse gemäß Anspruch 3, dadurch gekennzeichnet, daß zuerst nur das Plastifiziermittel auf Temperaturen von 160 bis 180°C unter gleichzeitiger Einwirkung von Druck- und Scherkräften erhitzt und anschließend granuliert wird und daß dann 0,4 bis 0,6 Volumenteile des so vorgefertigten Plastifiziermittels mit 0,6 bis 0,4 Volumenteilen des Pulverwerkstoffes bei Temperaturen von 110 bis 180°C, vorzugsweise 130 bis 160°C, unter gleichzeitiger Einwirkung von Druck- und Scherkräften gemischt werden.

3. Verwendung des Plastifiziermittels gemäß Anspruch 1 oder 2 zur Herstellung von Spritzgußmassen.

4. Verwendung der Spritzgußmasse gemäß Anspruch 3 zur Herstellung von Bauteilen aus keramischen und/oder metallischen Pulverwerkstoffen.

*Fig. 1*

*Fig. 2*

*Fig. 3*